# EUROPEAN PATENT APPLICATION

(11) **EP 2 996 044 A1**
(43) Date of publication of application: **16.03.2016**
(21) Application number: 14306408.7
(22) Date of filing: 12.09.2014
(51) Int. Cl.: G06F 13/42

(54) **Method for allocating an operating mode to a communication device**

(71) Applicant: GEMALTO SA, 92190 Meudon (FR)
(72) Inventor: Durand, Stéphane, 92190 MEUDON (FR)
(74) Representative: Cassagne, Philippe M.J.

(57) **Abstract**

This invention relates to a method for allocating an operating mode to a first communication device connected to a second communication device by a first connection line controlled by the first communication device and by a second connection line controlled by the second communication device, a first signal carried by the first connection line and a second signal and second signal carried by the second connection line being initially in a passive state, the method comprising the following steps: defining (200) a time reference t_ref; monitoring (201) the state of the second signal carried by the second connection line in order to detect if the second device is operating in master mode, the second signal being switched (201) to the passive state at a time t_switch < t_ref + T_master if the second communication device operates in a master mode or at a time t_switch ≥ t_ref + T_master otherwise; allocating (202) a slave mode to the first communication device when the second communication device is operating in a master mode or allocating the master mode otherwise.

## Description

### TECHNICAL FIELD

The present invention relates to a method for allocating an operating mode to a first communication device connected to a second communication device and is applicable to electronic interfaces.

### BACKGROUND OF THE INVENTION

A serial interface is an interface wherein information is transferred one bit at a time from a first device toward a second device. A serial interface can implement simplex, half-duplex or full-duplex communications.

As an example, the international standard ISO/IEC 7816-3 defines a transmission protocol wherein one wired connection is used for a clock and another one for data transmission. In that case, one of the devices is a smartcard and behaves as a slave, the other one being a host behaving as the master and imposing its clock to its slave. This means that the smartcard do not take any initiative and that the whole communication is controlled by the host device. This interface allows half-duplex communications, which means that only one of the connected devices can transfer data at a time.

Other kinds of interfaces allow full duplex communication. The Single Wire Protocol (SWP) as defined in the international standard ETSI TS 102 613 v 9.3.0 is an example of full-duplex communication protocol between a smart card and a host device. This protocol operates in master/slave mode, the smart card being the slave. This protocol is implemented thanks to a single wired connection dedicated to data. The voltage is controlled by the master and the intensity by the slave allowing both master and slave to communicate at the same time.

Another example of existing protocol is the standard de facto called Serial Peripheral Interface (SPI). This protocol also operates in master/slave mode. In that case, two wired lines are used to transmit data to and from the master device. Once more, the smart card is operating in slave mode.

An interface operating in master/slave mode is asymmetrical. This means that the device operating as a slave is not able to initiate a communication by itself.

In a system wherein devices are configured as masters or slave, a master can only be connected to a slave and of course, a slave can only be connected to a master. Thus, a smart card which is configured to operate in slave mode can only be connected to a host device which is configured to operate in master mode. Further, the smart card is not able to initiate a communication once connected to a host device. Therefore, if a first device, for example a smart card operating in slave mode, has to be connected to a host device also operating in slave mode, a communication is impossible. This is a heavy constraint that has to be taken into account while designing a system comprising a plurality of devices to be connected.

### SUMMARY OF THE INVENTION

This invention relates to a method for allocating an operating mode to a first communication device connected to a second communication device by a first connection line controlled by the first communication device and by a second connection line controlled by the second communication device, a first signal carried by the first connection line and a second signal and second signal carried by the second connection line being initially in a passive state, the method comprising the following steps:
- defining a time reference t_ref as the time instant at which the first and second signals are together in an active state for the first time;
- monitoring the state of the second signal carried by the second connection line in order to detect if the second device is operating in master mode, the second signal being switched to the passive state at a time t_switch < t_ref + T_master if the second communication device operates in a master mode or at a time t_switch ≥ t_ref + T_master otherwise;
- allocating a slave mode to the first communication device when the second communication device is operating in a master mode or allocating the master mode otherwise.

In one embodiment, the first signal carried by the first connection line is switched to the passive state after the allocation of the operating mode to the first device.

According to one aspect of the invention, a time instant t_mon at which the state of the second signal is monitored is chosen as t_mon = t_ref + T_master.

According to another aspect of the invention, a time instant t_mon at which the state of the second signal is monitored is chosen as t_mon = t_ref + T_master + D, D being a predefined strictly positive time duration.

As an example, the signal carried by the second connection line, when the second device is not operating in master mode, is switched to the passive state at a predetermined time chosen such that the switching of the signal carried by the first connection line has already occurred.

In one embodiment, the method comprises an initialization phase wherein one of said first and second communication devices switch the connection line under its control towards the active state, the other device being configured to detect this change of state and as a response to switch in turn the connection line under its control towards the active state.

In one embodiment, the first communication device is adapted to operate in both slave and master modes and the second communication device is configured to operate in a single predefined mode which is either master or slave.

The invention also relates to a system comprising a first communication device connected to a second communication device by using a first and a second connection line, a communication between these two devices being initiated by applying the method described above.

In one embodiment, a serial interface is used to exchange data between the first and second communication devices, said interface being of Serial Peripheral Interface type.

The first and second lines are for example controlled in open-drain mode.

In one embodiment, the active state corresponds to a low voltage state and the passive state corresponds to high voltage state.

The invention also relates to a communication device comprising a mechanism for allocating an operating mode which can be either master or slave, said communication device being configured to be connected to a host device by a first connection line controlled by the communication device and by a second connection line controlled by the host device, a first signal carried by the first connection line and a second signal and second signal carried by the second connection line being initially in a passive state, the communication device comprising:
- a first module to switch the first connection lines to an active state, a time reference t_ref being defined as the time at which both first and second lines are in active state;
- a second module to monitor the occurrence of a switch of the second connection line to the passive state in order to determine if a switch occurred at a time t_switch < t_ref + T_master, the host device being considered as operating in a master mode in that case, or at a time t_switch ≥ t_ref + T_master;
- a third module to allocate the slave mode to the communication device when the host device is operating in a master mode or to allocate the communication device to the master mode otherwise.

In one embodiment, the communication device is configured to be a secure element.

In another embodiment, the communication device is a smart card.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- figure 1 gives an example of a system comprising a secure device and a host device configured to communicate through a serial interface and implementing the invention;
- figure 2 is a flow diagram representing a method for allocating an operating mode to a communication device;
- figure 3A illustrate the allocation of an operating mode to a first device which is connected to a second device operating in master mode;
- figure 3B provides an example where a first device in an indeterminate operating mode is connected to a second device operating in slave mode;
- figures 4A-4C represent three scenarios illustrating the allocation of an operating mode to a first device according to an embodiment of the invention wherein a safety margin for decision is used;
- figure 5A illustrates a scenario wherein a safety margin D1 allocated to the first device is smaller than a safety margin D2 allocated to the second device;
- figure 5B illustrates another allocation scenario wherein the safety margin D1 of the first device is greater than the safety margin D2 of the second device.

### DETAILED DESCRIPTION

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

In the following description, numerous specific details are set forth. However, it is understood that embodiments may be practiced without these specific details. In other instances, well known circuits, structures and techniques have not been show in detail in order not to obscure the understanding of the description.

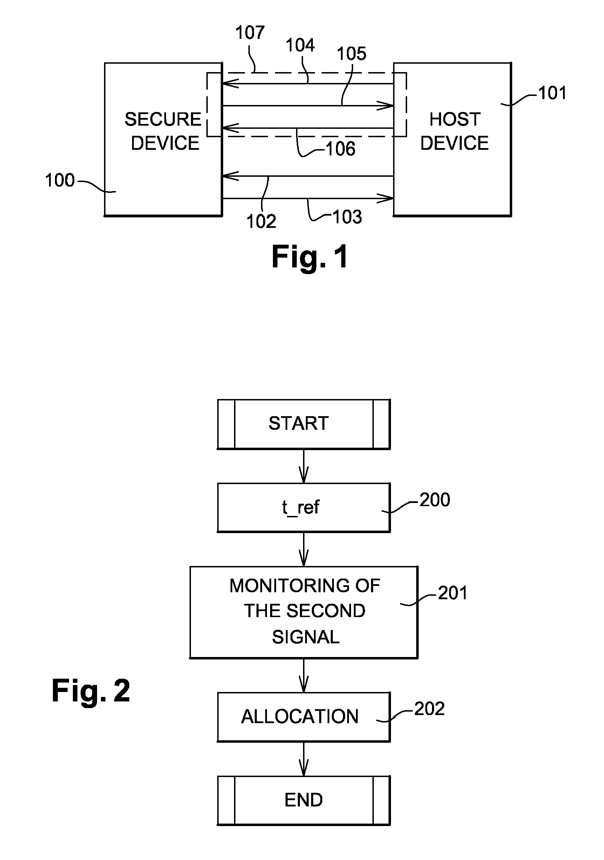

Figure 1 gives an example of a system comprising a secure device and a host device configured to communicate through a serial interface and implementing the invention.

In this description, the communication devices are communicating through a serial interface. However, the invention is also applicable to devices configured to communicate through a parallel interface.

The invention proposes a mechanism to initiate a communication between two devices when they are connected. At least one of the two devices can be configured to operate either in master or in slave mode depending of the device to which it is connected.

In this specification, a secure device refers to a hardware device (possibly comprising software) whose aim is to secure the access to a system delivering services. Further, a secure device is tamper-resistant and is configured to embed one or several applications as well as confidential and cryptographic data. According to this definition, a secure device may be a smart card or a chipset. In the example of a smart card, a secure element can be inserted in a slot integrated in a host device which is deployed by an operator.

Herein under is considered a case in which the invention method for initiating a communication is applied to a secure device 100 and a host device 101. However, it is only for exemplifying purposes and is not considered to reduce the scope of the present invention as it is applicable to any kind of device implementing a serial or a parallel interface.

The invention allows the device whose operating mode is indeterminate to allocate the mode which is suitable to communicate with the device with which it is connected. For that purpose, two connection lines 102, 103 are implemented to allocate an operating mode of the device or devices whose mode is indeterminate. Once the operating mode(s) are allocated, a data transmission can be set up using for example a serial interface 107. Additionally, the proposed mechanism is adapted such that the communication can be initiated by any of the two devices. In the example of figure 1, the secure device is initially in an indeterminate mode which means that it is neither configured in master nor slave mode. Supposing that the secure device 100 is initiating the communication with the host device 101, an exchange of control signals through lines 102, 103 allows the secure device 100 to determine if the host device 101 has already an allocated operating mode. It will then deduce the operating mode which is suitable for communicating with the host device 101 through the interface 107. In this example, the secure device 100 detects that the host device 101 operates in master mode and therefore chooses to operate in slave mode. Then, data can be transmitted via the interface 107. In this example, the interface is a full duplex Serial Peripheral Interface (SPI). The skilled person will appreciate that any kind of serial interface for which a first device operates in master mode and a second device operates in slave mode can be implemented with the invention. As an example, a serial interface considered in this invention can also be a single wire protocol (SWP) interface. Further, a parallel interface can be used instead, for example using a SCSI bus (Small Computer System Interface) or a parallel port.

As in this example the host device acts as the master, it is thus in charge of generating a master clock which is then imposed to the secure device via a dedicated connection 104. Additionally, the SPI interface comprises two other lines 105, 106 respectively carrying two other logic signals namely the Master Output, Slave Input (MOSI) 106 and the Master Input, Slave Output (MISO) 105.

In the example of figure 1, an example with a secure device and a host device has been provided. However, the invention is applicable to any kind of devices which are able to communicate through a serial or parallel interface once connected. Therefore, the invention is now described using the expressions "first communication device" and "second communication device".

Figure 2 is a flow diagram representing a method for allocating an operating mode to a first communication device and for initiating a communication through a serial or parallel interface between a first communication device and a second communication device.

The first and second communication devices are configured to be connected to each other by a first connection line controlled by the first communication device and by a second connection line controlled by the second communication device.

The signals carried by the first and second connection lines are initially positioned in a passive state.

In this description, the signal carried by the connection lines can be set into at least two states. A first state is called the passive state and a second state is called the active state. For example, the passive and active states correspond respectively to a low voltage state and to a high voltage state. Alternatively, the passive and active states correspond respectively to a high voltage state and to a low voltage state.

The method according to the invention comprises a first step 200 which is applied in order to define a time reference t_ref. For that purpose, the signals carried by the first and second connection lines 102, 103 are switched to an active state. The time reference t_ref is defined as the time at which the two signals carried by the two connection lines are in active state. In practice, each line may switch from the passive state to the active state at different time instants. Therefore, t_ref is the time instant at which both connection lines 102, 103 are together in active state for the first time after both signals carried by connection lines 102, 103 have been switched to a passive state.

Then, the signal carried by the second connection line 103 is switched to the passive state at a time instant t_switch, this time instant being chosen depending on the operating mode of the second communication device. More precisely, the second connection line 103 is switched:
- at a time instant t_switch < t_ref + T_master if the second communication device 101 operates in a master mode;
- or at a time instant t_switch ≥ t_ref + T_master otherwise.

By doing this, the second connection device declares if it is operating in master mode or not.

The method then comprises a step 201 wherein the second connection line 103 is monitored by the first communication device 100 in order to detect if the second device 101 is operating in master mode or not.

Then, a step 202 allocates an operating mode to the first communication device depending of the results of the monitoring 201. According to the invention, the slave mode is allocated to the first communication device 100 when the second communication device 101 is operating in a master mode, the master mode being allocated otherwise.

Then, the first connection line 102 can be switched to the passive state, which advantageously informs the second device that an operating mode has been correctly allocated to the first device.

In one embodiment, the first and second devices are configured such as the connection lines are controlled using the open-drain technology, the passive and active states corresponding respectively to a high voltage state and to a low voltage state. In that case, a device controlling a given connection line has one command allowing him to bring the signal carried by the connection line under its control to a low state and one command to release the connection line. This means that there is no command to bring the signal into a high state. The other device which monitors the connection line imposes a slight constraint on it in order to bring it to the high state by default. However, if the device controlling the connection line decides to put the signal in low state, this constraint is negligible with respect to the command. One advantage of this embodiment is that if a device monitoring a given connection line is not able to change the signal it carries, for example because it has not yet started or because it is in a non-operational state, the device monitoring the line see nevertheless a value determined by the slight constraint (as opposed to a "push-pull" configuration wherein the state value up / down is forced by the host controlling the line). If this device is not ready, then it is not possible to know what will be the state of the signal carried by the line.

In this description, the first and second connection lines are used to carry respectively a first and a second signal used to allocate an operating mode to at least one of the connected devices. These two signals are asynchronous. However, once the operating mode(s) is or are allocated, these two communication lines can be used for other purposes, for example for data transmission.

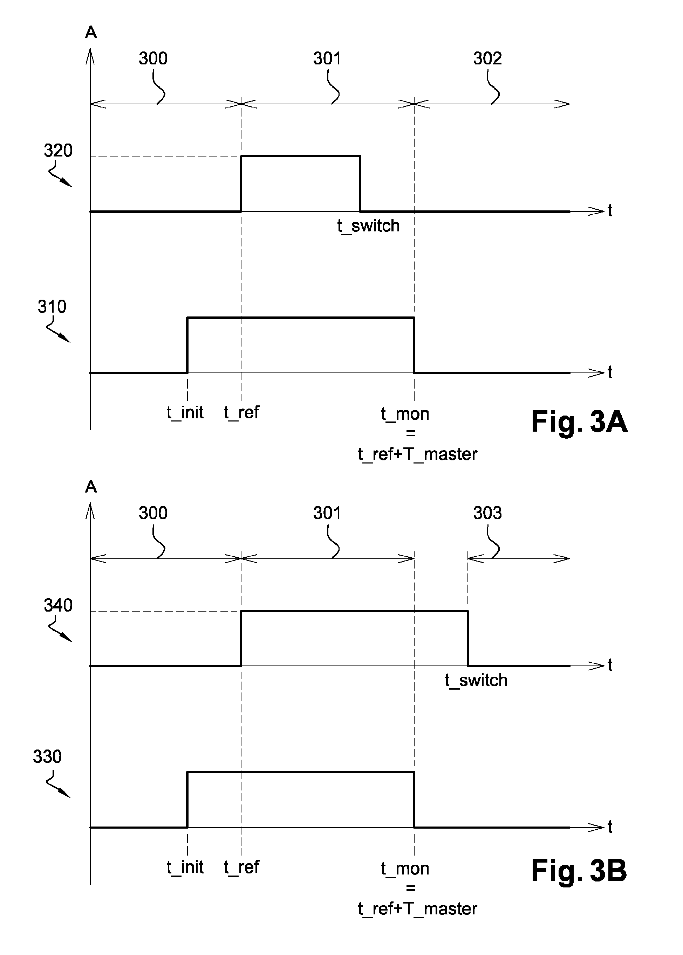

Figure 3A illustrate the allocation of an operating mode to a first device which is connected to a second device operating in master mode.

In this example, a first signal 310 is the signal carried by the first connection line controlled by the first communication device and a second signal 320 is the signal carried by the second connection line controlled by the second communication device. The operating mode of the first device is indeterminate whereas the operating mode of the second communication device is predefined to be the master mode.

The communication between the two devices is initiated in two phases 300, 301. In a first phase 300, the first device switches the first connection line to the active state at a time instant t_init. The first line is monitored by the second device which detects the change of state, for example by detecting a signal edge at time instant t_init. As a response, the second device switches the second connection line 320 to the active state at a time instant t_ref. The time instant t_ref is the time at which both lines are set up in an active state and is therefore used as the time reference for the next phase 301.

During the allocation phase 301, the operating mode of the first device is allocated. For that purpose, a predefined period T_master allows to define a time instant t_mod = t_ref + T_master for deciding of said operating mode. Between t_ref and t_ref + T_master, a device which is operating in master mode will switch the signal carried by the connection line under its control from the active state to the passive state. By doing this, the second communication device declares its operating mode. In the example of figure 3A, the second device switches its connection line 320 at a time t_switch wherein t_ref < t_switch < t_ref + T_master.Then, at time t_ref + T_master, the first device monitors the second connection line and detects that its carried signal has switched to the passive state, which means that the second device is operating in master mode. Therefore, the first device knows that it should operate in slave mode and is then configured this way in order to communicate with the first device. The first device then switches in turn to the passive state the signal carried by the connection line 310 under his control. That way, the second device is able to verify that the first device has correctly set up its operating mode. In a third phase 302, the two devices are then able to exchange data.

Figure 3B provides an example where a first device in an indeterminate operating mode is connected to a second device operating in slave mode. The initialization phase 300 is identical to the one of figure 3A. The allocation phase 301 is different as the second device is operating in slave mode and not in master mode. Therefore, the signal carried by the second connection line 340 is maintained in active state during this phase 301.

At a time instant t_mon = t_ref + T_master, the first device monitors the second connection line 320 and detects the state of its carried signal. As it is still in active state, the first device knows that the second device is operating in slave mode and that it should operate accordingly in master mode. The second device then switches the signal carried by connection line 320 to the passive state at a time instant t_switch ≥ t_ref + T_master.For example, once the two signals carried by the two connection lines are returned in passive state, the two devices can begin to exchange data 303.

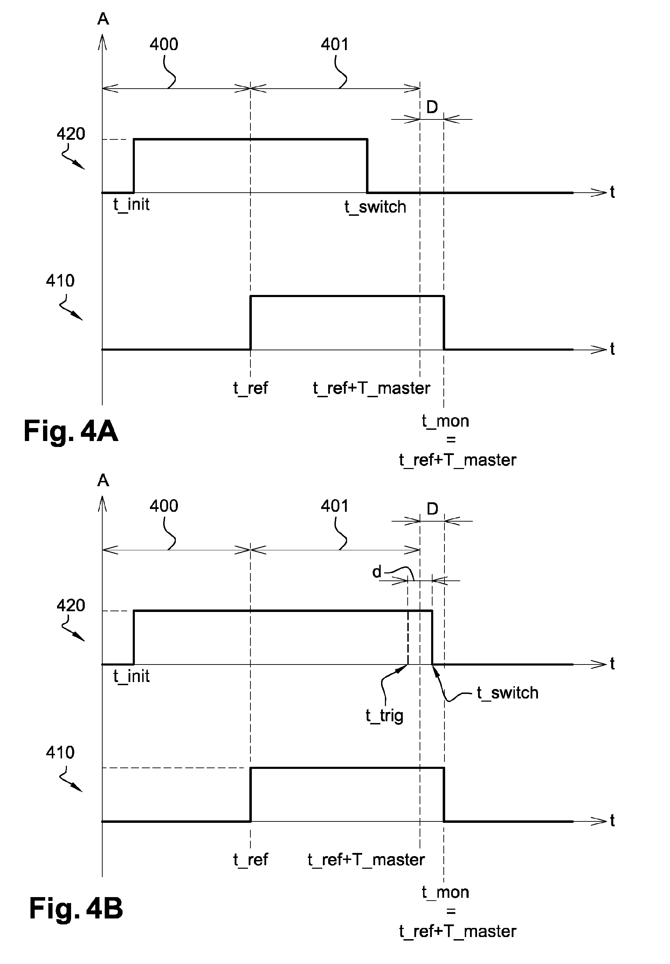

Figures 4A-4C represent three scenarios illustrating the allocation of an operating mode to a first device according to an embodiment of the invention wherein a safety margin for decision is used.

As for figures 3A-3B, the operating mode of the first device is indeterminate, while the operating mode of the second device is predefined.

In figure 4A, the second device is configured to operate in master mode. Additionally, the second device is the one who wants to initiate a communication with the other connected device. Therefore, in a first phase 400, the signal carried by the second connection line 420 switches from the passive state to the active state at a time t_init. As a response, the signal carried by the first connection line 410 controlled by the first device also switches to the active state at a time instant t_ref.

In a second phase 401, as the second device operates in master mode, the second device controls the signal carried by the second connection line 420 for it to switch to the passive at a time instant t_switch < t_ref + T_master.In this embodiment, the first device monitors the second connection line and decide of its own state at a time instant defined as t_mon = t_ref + T_master + D. D is a predefined time duration greater than zero which is used as a safety margin for deciding the operating mode to be allocated to the first device.

In the example of figure 4B, the second device is configured to operate in master mode. Thus, during the allocation phase 401, the second signal carried by the second connection line is controlled in order to switch to the passive state before t_ref + T_master. However, depending on the implementation, a change of state can be triggered by the second device at a given time instant t_trig but effective at a delayed time instant t_switch = t_trig + d. If the delay d is not taken into account, a second device operating in master mode may be seen by the first device as operating in slave mode. Advantageously, the safety margin D allows avoiding these situations. For that purpose, D should be chosen greater than the maximum possible value of delay d.

Then, the first device will monitor the signal carried by the second connection line at a time instant t_mon = t_ref + T_master + D. Therefore, if t_switch is comprised between t_ref + T_master and t_ref + T_master + D, the operating mode of the second device will still be considered by the first device as operating in master mode. Then, the signal carried by the first connection line 410 can switch to the passive state, for example at time instant greater or equal to t_ref + T_max + D.

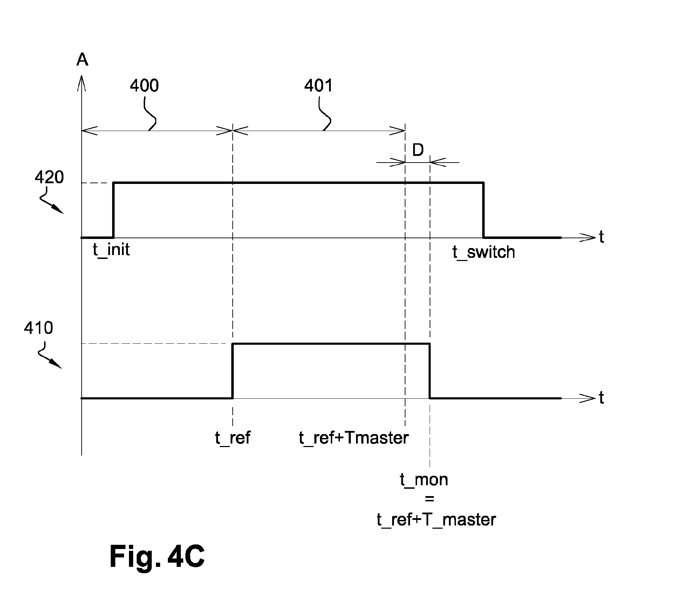

In figure 4C, the second device is configured to operate in slave mode. Therefore, the second device is configured to switch the signal carried by the second connection line to the passive state at a time t_switch ≥ t_ref + T_master + D. Therefore, the second device will be detected as operating in slave mode at the time t_mon = t_ref + T_master + D of monitoring the signal carried by the second connection line 420.

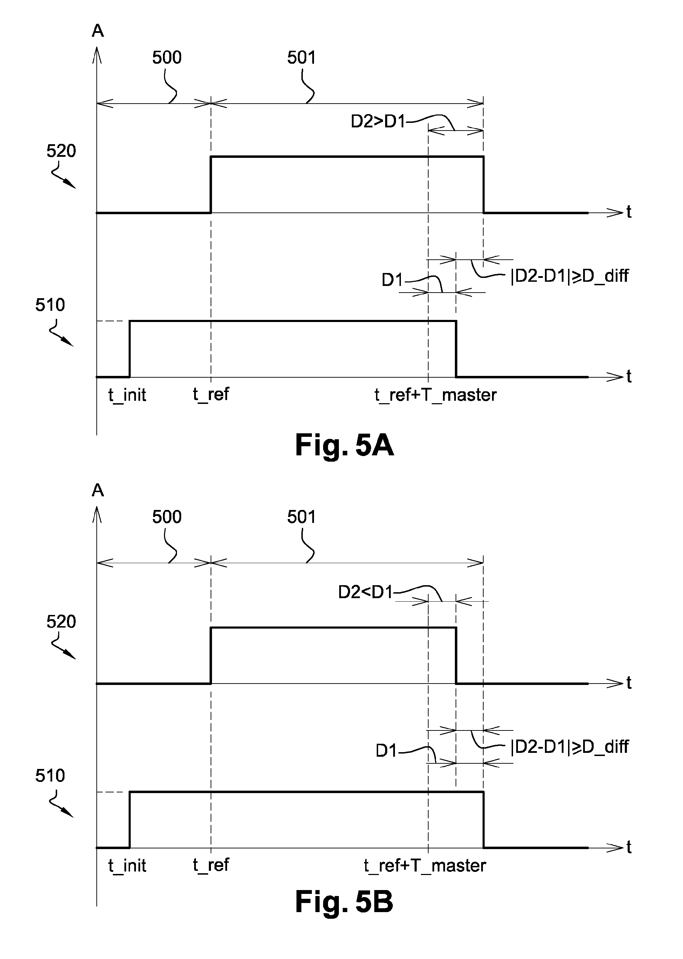

Figures 5A and 5B illustrate two scenarios where a first and a second device are both configured to operate either in master or slave mode. As the operating modes of these two devices are initially indeterminate, a mechanism should be implemented to allocate a role to each of the devices. The method according to the invention allows such allocation. For that purpose, each device operates with a predefined security margin. The safety margin D1 allocated to the first device and the safety margin D2 allocated to the second device should take different values in order to avoid conflicts when allocating the operating modes. In figures 5A and 5B, the signals 510, 520 correspond respectively to the first connection lines controlled by the first device and to the second connection line controlled by the second device.

Figure 5A illustrates a scenario wherein a safety margin D1 allocated to the first device is smaller than a safety margin D2 allocated to the second device. The first and second signals respectively carried by the first 510 and second 520 connection lines are initially set in passive state. During the initialization phase 500, the first device switches to the active state the signal carried by the first connection line 510 at a time instant t_init. As a response, the second device switches the signal carried by the second connection line at a time t_ref. During the allocation phase 501, the first device monitors the signal carried by the second connection line at a time t_mon1 = t_ref + T_master + D1 and detects that it is still in active state. As a consequence, the first device takes the role of master and switches the signal carried by the first connection line towards the passive state. At a time t_mon2 = t_ref + T_master + D2, the second device monitors the signal carried by the first connection line and detects that its signal is now in passive state. Therefore, the second device knows that it should operate in slave mode. It then switches the signal carried by the second connection lines into passive state. As D1 and D2 are different, conflicts during the allocation of the operating modes can avoided. Further, in an embodiment invention, an additional margin D_diff can be defined in order to choose D1 and D2 such that the absolute value of difference D2 - D1 is greater or equal to D_diff.

Figure 5B illustrates another allocation scenario wherein the safety margin D1 of the first device is greater than the safety margin D2 of the second device. In that case, the master mode will be allocated to the second device and the slave mode to the first device.

## Claims

1. A method for allocating an operating mode to a first communication device (100) connected to a second communication device (101) by a first connection line (102) controlled by the first communication device (100) and by a second connection line (103) controlled by the second communication device (101), a first signal carried by the first connection line (102) and a second signal and second signal carried by the second connection line (103) being initially in a passive state, the method comprising the following steps:
- defining (200) a time reference t_ref as the time instant at which the first and second signals are together in an active state for the first time;
- monitoring (201) the state of the second signal carried by the second connection line in order to detect if the second device is operating in master mode, the second signal being switched (201) to the passive state at a time t_switch < t_ref + T_master if the second communication device (101) operates in a master mode or at a time t_switch ≥ t_ref + T_master otherwise;
- allocating (202) a slave mode to the first communication device (100) when the second communication device (101) is operating in a master mode or allocating the master mode otherwise.

2. A method according to claim 1, wherein the first signal (102) carried by the first connection line is switched to the passive state after the allocation (202) of the operating mode to the first device.

3. A method according to one of the preceding claims, wherein a time instant t_mon at which the state of the second signal is monitored (201) is chosen as t_mon = t_ref + T_master.

4. A method according to claim 1 or 2, wherein a time instant t_mon at which the state of the second signal is monitored (201) is chosen as t_mon = t_ref + T_master + D, D being a predefined strictly positive time duration.

5. A method according to any of claims, wherein the signal carried by the second connection line (103), when the second device (101) is not operating in master mode, is switched to the passive state at a predetermined time chosen such that the switching of the signal carried by the first connection line (102) has already occurred.

6. A method according to any of the preceding claims comprising an initialization phase (300, 400) wherein one of said first and second communication devices (100, 101) switch the connection line under its control towards the active state, the other device being configured to detect this change of state and as a response to switch in turn the connection line under its control towards the active state.

7. A method according to one of the preceding claims, wherein the first communication device (100) is adapted to operate in both slave and master modes and the second communication device (101) is configured to operate in a single predefined mode which is either master or slave.

8. A system comprising a first communication device (100) connected to a second communication device (101) by using a first and a second connection line, a communication between these two devices being initiated by applying the method as claimed in claims 1 to 7.

9. A system according to claim 8, wherein a serial interface is used to exchange data between the first and second communication devices, said interface being of Serial Peripheral Interface type.

10. A system according to claim 8 or 9, wherein the first and second lines are controlled in open-drain mode.

11. A system according to claim 10, wherein the active state corresponds to a low voltage state and the passive state correspond to high voltage state.

12. A communication device (100) comprising a mechanism for allocating an operating mode which can be either master or slave, said communication (100) device being configured to be connected to a host device (101) by a first connection line (102) controlled by the communication device (100) and by a second connection line (103) controlled by the host device (101), a first signal carried by the first connection line (102) and a second signal and second signal carried by the second connection line (103) being initially in a passive state, the communication device (100) comprising:
- a first module to switch the first connection lines (102) to an active state, a time reference t_ref being defined as the time at which both first and second lines (102, 103) are in active state;
- a second module to monitor the occurrence of a switch of the second connection line (103) to the passive state in order to determine if a switch occurred at a time t_switch < t_ref + T_master, the host device being considered as operating in a master mode in that case, or at a time t_switch ≥ t_ref + T_master;
- a third module to allocate the slave mode to the communication device (100) when the host device (101) is operating in a master mode or to allocate the communication device (100) to the master mode otherwise.

13. A communication device according to claim 12 configured to be a secure element.

14. A communication device according one of claims 12 or 13 which is a smart card.
